# EUROPÄISCHE PATENTSCHRIFT

(11) **EP 1 447 601 B1**
(45) Veröffentlichungstag und Bekanntmachung des Hinweises auf die Patenterteilung: **13.08.2008**
(21) Anmeldenummer: 04002773.2
(22) Anmeldetag: 09.02.2004
(51) Int. Cl.: F16K 1/44, F16K 1/34

(54) **Doppelsitzventil**
Double seat valve
Soupape à siège double

(30) Priorität: 12.02.2003 DE 10305990
(43) Veröffentlichungstag der Anmeldung: 18.08.2004
(73) Patentinhaber: Elster GmbH, 55252 Mainz-Kastel (DE)
(72) Erfinder: Lampe, Thomas, 49477 Ibbenbüren (DE)
(74) Vertreter: Harlacher, Mechthild

(56) Entgegenhaltungen:
- BE-A- 559 005
- DE-C- 229 601
- GB-A- 2 314 140
- US-A- 4 948 096
- US-A- 5 168 898
- US-A1- 2002 130 291

## Beschreibung

Die Erfindung betrifft ein Ventil, welches als Doppelsitzventil ausgebildet ist, mit einem Gehäuse, mindestens einem dem Gehäuse zugeordneten Ventilsitz, einem Ventilkörper, der in dem Gehäuse geführt und in Richtung auf den Ventilsitz bewegbar ist und mindestens einem Dichtungsmittel, das dem Ventilkörper zugeordnet ist und bei Auflage auf dem Ventilsitz letzteren verschließt, wobei der Ventilkörper in einem ersten Endabschnitt beführt ist.

Doppelsitzventile finden sich beispielsweise bei einer Vielzahl von Gasarmaturen. Sie ermöglichen einen hohen Gasdurchsatz. s sind aus der Praxis Ventile bekannt, bei denen der Ventilkörper einen zapfenartigen Ansatz aufweist, der im Gehäuse selbst geführt ist. Gleichermaßen bekannt sind Ventilkörper, die auf einem - beispielsweise mit dem Gehäuse verbundenen - Zapfen verschiebbar gelagert sind. Nicht immer jedoch schließen die Ventile zuverlässig während ihrer gesamten Lebensdauer.

Die GB- A- 2314140 (D 1) zeigt einen Absperrstopfen aus Gummi für einen Wasserhahn, der manuell zu bedienen ist. Der Absperrstopfen weist im Bereich des Außenumfangs eine Ausnehmung zur Reduzierung der Steifigkeit auf, um die Stellkräfte, die durch Körperkraft aufgebracht werden müssen, zu reduzieren.

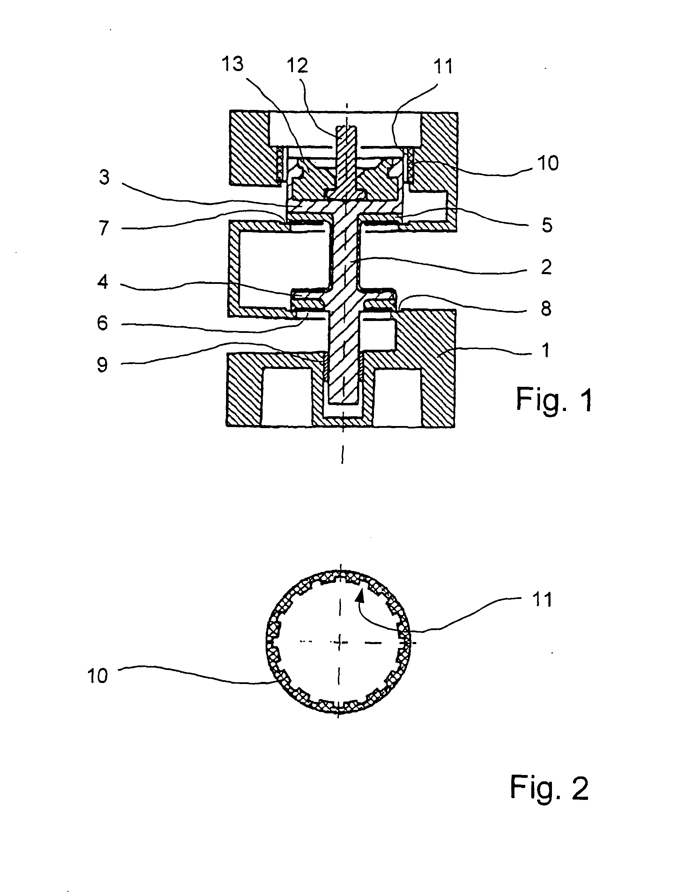

Ein gattungsgemäßes Ventil ist aus der DE 229601 bekannt, die zwei verschiedene Konstruktionen (Fig. 1 und Fig. 2) eines Doppelsitzventils zeigt. Das Doppelsitzventil weist in einem Gehäuse zwei Ventilsitze auf, denen je ein Ventilteller zugeordnet ist, welche mit einem Schaft miteinander verbunden sind. Der Schaft ist mit einer Spindel verbunden, die manuell betätigt wird. Die Spindel weist ein Außengewinde auf, das mit einem Innengewinde in einem Deckel zusammenwirkt, der auf das Gehäuse aufgesetzt ist. Bei der Konstruktion nach Fig. 1 sind die Ventilteller über den gesamten Querschnitt nachgiebig. Der Schaft ist nicht nachgiebig. Bei der Konstruktion nach Fig. 2 sind die Ventilteller und der Schaft mittels eines elastischen Zwischenglieds nachgiebig. Damit soll erreicht werden, dass der Druck der Ventilspindel unabhängig voneinander auf die Ventilteller übertragen werden kann. Bei der in Fig. 1 dargestellte Konstruktion ist die Dichtheit nicht sichergestellt, weil die Ventilteller komplett nachgiebig und somit nicht langlebig sind. Folglich ist die Funktionssicherheit ist gering. Die in Fig. 2 dargestellte Konstruktion ist aufgrund des elastischen Zwischenglieds instabil, so dass die Funktionssicherheit gering ist. Bei beiden Konstruktionen ist nachteilig, dass die Spindel im Deckel geführt wird, weil ein fertigungsbedingter Versatz zwischen Deckel und Gehäuse zu Winkelfehlern zwischen Ventilteller und Ventilsitz führt.

Der Erfindung liegt die Aufgabe zugrunde, ein Ventil zur Verfügung zu stellen, das eine verbesserte Dichtigkeit und damit höhere Funktionssicherheit zur Verfügung stellt.

Zur Lösung dieser Aufgabe ist das eingangs genannte Ventil erfindungsgemäß dadurch gekennzeichnet, der Ventilkörper in einem ersten Endabschnitt und in einem zweiten Endabschnitt in dem Gehäuse gerührt ist und dass im Bereich des Außenumfangs des Dichtungsmittels eine Ausnehmung zur Reduzierung der Steifigkeit vorgesehen ist.

Der Erfindung liegt die Erkenntnis zugrunde, dass die Undichtigkeit beispielsweise auf Fertigungsungenauigkeiten und dadurch bedingte Schiefstellungen von dem Ventilkörper und dem Ventilsitz oder auch einer mangelnden Ausrichtung zurückzuführen ist. Bereits eine geringfügige Neigung der Achse des Ventilkörpers in Bezug auf den Ventilsitz kann dazu führen, dass das Ventil nicht zuverlässig schließt.

Durch die erfindungsgemäße Ausnehmung im Bereich des Außenumfangs des Dichtungsmittels wird das Dichtungsmittel im Bereich von dessen Auflagefläche flexibler. Hierdurch können ungewollte Schiefstellungen des Ventilkörpers kompensiert werden mit der Folge, dass trotz dieser Schiefstellung oder etwaiger sonstiger Fertigungsungenauigkeiten das Ventil dennoch zuverlässig schließt. Die Erfindung gestattet es ferner, dass als Dichtungsmittel ein festes und damit langlebiges Material eingesetzt werden kann, ohne auf die im Dichtungsbereich notwendige Flexibilität des Materials verzichten zu müssen.

Es sind beliebige Querschnittsformen der Ausnehmung denkbar. Beispielsweise kann die Ausnehmung halbkreisförmig oder halb-oval ausgebildet sein. Besonders vorteilhaft ist es jedoch, wenn die Ausnehmung im Wesentlichen V-förmig ausgebildet ist. Dies ermöglicht eine optimale Nachgiebigkeit des Dichtungsmittels in dem entsprechenden Bereich. Außerdem kann durch eine "spitzwinklige" V-Form ein Anschlag für den nachgebenden Abschnitt des Dichtungsmittels geschaffen werden. Es lässt sich durch die Wahl des Winkels also derjenige Bereich einstellen, in dern beim Schließen des Ventils das Dichtungsmittel flexibel sein soll.

Vorzugsweise erstreckt sich die Ausnehmung in radialer Richtung des Dichtungsmittels bis über deren Auflagefläche. Je tiefer die Ausnehmung in dem Dichtungsmittel ausgebildet ist, desto nachgiebiger ist es in diesem Bereich.

In aller Regel wird man auf der Dichtseite des Dichtungsmittels eine Dichtlippe vorsehen, die bei geschlossenem Ventil auf dem Ventilsitz aufliegt. Die Dichtlippe gestattet eine definierte Auflagefläche des Dichtungsmittels auf dem Ventilsitz. Im Übrigen ist es durch die Dichtlippe möglich, das Dichtungsmittel besonders dünn auszubilden. Auch bei einem dünnen Dichtungsmittel bietet die (abstehende) Dichtlippe ausreichend Material für eine Verformung. Die Form der Dichtlippe ist beliebig. Eine spitz zulaufende Querschnittsform oder eine Trapezform werden als besonders günstig angesehen. Gleichermaßen möglich ist eine im Wesentlichen recht-eckige Querschnittsform.

Die beidseitige Führung des Ventilkörpers im Gehäuse verlangt eine besonders hohe Fertigungsgenauigkeit aller Komponenten, um die Dichtigkeit des Ventils zu gewährleisten. Insbesondere bei einem Doppelsitzventil bietet es sich an, dass der Ventilkörper in mindestens einem hülsenförmige Lagerelement geführt ist, das in das Gehäuse einsteckbar ist. Bei einer Lagerung des Ventilkörpers in zwei Lagerelementen liegen letztere auf einer gemeinsamen Achse und sind vorzugsweise an den äußeren Enden des Ventilkörpers angeordnet. Dadurch ist eine präzise Führung des Ventilkörpers sichergestellt.

Die beiden Dichtungskanten bzw. -lippen können die gleiche Steifigkeit aufweisen. Bei geschlossenem Ventil werden die Dichtkanten dann gleichmäßig belastet. Alternativ wird vorgeschlagen, dass die Dichtungsmittel zumindest im Bereich von deren Dichtungsfläche eine unterschiedliche Steifigkeit aufweisen. Wenn der Abstand der Auflageflächen der Dichtungsmittel größer ist als der Abstand der Ventilsitze, kann der Schließvorgang des Ventils so gesteuert werden, dass die Dichtungsmittel nacheinander zur Auflage auf den Ventilsitz kommen. Besonders vorteilhaft ist es, wenn das Dichtungsmittel mit der geringeren Steifigkeit beim Schließen des Ventils zuerst zur Auflage auf den Ventilsitz kommt. Bei dem Dichtungsmittel mit der höheren Steifigkeit braucht ggf. keine Ausnehmung vorgesehen zu sein. Beim Schließen des Ventils wird zuerst das Dichtungsmittel mit der geringeren Steifigkeit verformt und verschließt den zugehörigen Ventilsitz. Unmittelbar danach kommt das andere Dichtungsmittel - zur Auflage auf dem anderen Ventilsitz und wird dicht gegen diesen gepresst. Die versetzte Schließung des Ventils kann derart erfolgen, daß zuerst der untere Durchlaß und anschließend der obere Durchlaß oder umgekehrt verschlossen wird.

In wesentlicher Weiterbildung der Erfindung wird vorgeschlagen, daß der Ventilkörper über einen Aktor betätigbar ist, der über ein Kopplungselement mit dem Ventilkörper verbunden ist. Das Kopplungselement entkoppelt erfindungsgemäß den Ventilkörper vom Aktor und läßt den Ventilkörper "frei" im Gehäuse bewegen.

Insbesondere eine seitliche Verspannung zwischen dem Ventilkörper und dem Aktor hat in der Vergangenheit häufig zu einer eingeschränkten Bewegung des Ventilkörpers im Gehäuse geführt. Das Kopplungselement hingegen läßt dem Aktor ein gewisses radiales Spiel, so daß Verspannungen nicht mehr auftreten können. Besonders vorteilhaft ist es, wenn das Kopplungselement aus einem elastischen Material, vorzugsweise aus Gummi, besteht. Ein derartiges Material kann etwaige Schiefstellungen oder einen etwaigen Versatz oder sonstige Fehlstellungen besonders gut ausgleichen. Im übrigen ist ein Kopplungselement aus einem elastischen Material bestens für eine einfache Verbindung mit dem Ventilkörper geeignet. Je nach Konstruktion des Ventilkörpers wird es einfach zusammengedrückt oder zur formflüssigen Verbindung leicht gedehnt und in den ventilkörper eingesetzt oder darüber gestreift.

In Weiterbildung der Erfindung wird vorgeschlagen, daß das Kopplungselement im wesentlichen ringförmig ausgebildet ist und daß der Aktor durch das Kopplungselement hindurchgreift. Der Aktor ist in diesem Falle im Bereich des Kopplungselements im wesentlichen zapfenförmig ausgebildet und kann einen erweiterten Endbereich aufweisen, der einen Teil des ringförmigen Kopplungselements hintergreift. Das Kopplungselement selbst ist durch ein einfaches Zusammendrücken in eine entsprechende Aufnahme des Ventilkörpers einsetzbar.

Im folgenden wird die Erfindung anhand eines bevorzugten Ausführungsbeispiels näher erläutert. Die Zeichnung zeigt in
Figur 1 in schematischer Darstellung eine Schnittansicht eines erfindungsgemäßen Ausführungsbeispiels,
Figur 2 eine Draufsicht auf ein Lager des Ausführungsbeispiels nach Figur 1,
Figur.3 eine Schnittansicht des Ventilkörpers des Ausführungsbeispiels nach Figur 1 in Alleinstellung und
Figur 4 eine Schnittansicht eines Details aus Figur 2.

Das erfindungsgemäße Ventil weist ein Gehäuse 1 und einen Ventilkörper 2 auf, der bewegbar im Gehäuse 1 gelagert ist. Das Ventil ist als Doppelsitzventil ausgebildet und in seiner Schließstellung gezeigt.

Der Ventilkörper 2 weist zwei Ventilteller 3, 4 auf, die auf ihrer Unterseite Dichtungsmittel 5, 6 tragen. Die Dichtungsmittel 5, 6 sind unmittelbar auf den Ventiltellern 3, 4 aufvulkanisiert. Den Dichtungsmitteln 5, 6 sind in dem Gehäuse 1 ausgebildete Ventilsitze 7, 8 zugeordnet, auf denen die Dichtungsmittel in der Schließstellung des Ventils aufliegen.

Der Ventilkörper 2 ist wie oben erwähnt im Gehäuse 1 beweglich gelagert, und zwar in einem unteren Abschnitt in einem Lager 9 und in einem oberen Abschnitt in einem Lager 10. Beide Lager 9, 10 sind als Führungshülsen ausgebildet, wobei das Lager 10 eine gestufte Innenkontur aufweist, damit der Eingangsdruck ungehindert auf die Ventilachse wirken kann. Eine Draufsicht auf das Lager 10 ist in Fig. 2 dargestellt. Die Lagerung des Ventilkörpers 2 in seinem oberen und unteren Endbereich gestattet eine sichere und genaue Führung im Gehäuse 1. Zur Betätigung des Ventilkörpers 2 ist ein (lediglich schematisch angedeuteter) Aktor 12 vorgesehen, der beispielsweise von einem (nicht dargestellten) Stellmagnet angetrieben wird. Während herkömmlich häufig der Aktor 12 direkt mit dem Ventilkörper 2 verbunden war, ist erfindungsgemäß ein Kopplungselement 13 aus einem flexiblen Gummimaterial vorgesehen, in das der Aktor eingreift. Das Kopplungselement 13 ist ringförmig ausgebildet und wird zur Montage in den Ventilkörper 2 eingeklipst. Gleichermaßen kann es auf den Ventilkörper vulkanisiert werden, beispielsweise beim Aufbringen der Dichtungslippe. Etwaige Schiefstellungen des Aktors 12 führen aufgrund des erfindungsgemäßen Kopplungselements 13 nicht zu Verspannungen des Ventilkörpers 2 im Gehäuse 1, sondern werden von dem elastischen Kopplungselement 13 kompensiert. Die Funktionssicherheit des Ventils steigt durch das Kopplungselement 13 gegenüber herkömmlichen Lösungen erheblich.

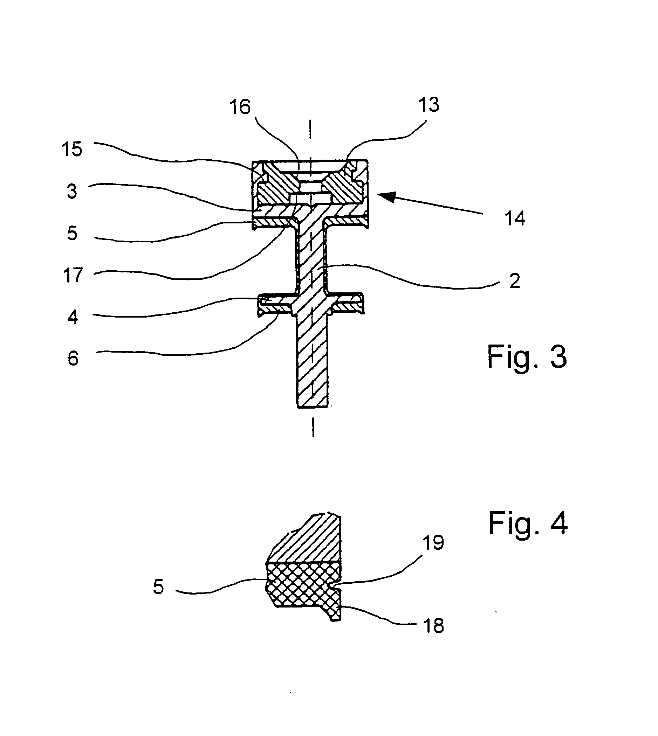

Figur 3 zeigt den Ventilkörper 2 mit eingesetztem Kopplungselement 13 in Alleinstellung. Vor der Montage des Ventilkörpers 2 im Gehäuse 1 wird das Kopplungselement 13 in den Ventilkörper 2 eingesetzt. Nach dem Entspannen des elastischen Materials liegt das Kopplungselement 13 in einer Aufnahme 14 des Ventilkörpers 2, wobei ein umlaufender Vorsprung 15 in der Aufnahme 14 für eine formschlüssige Verbindung sorgt. Die zentrale Öffnung des Kopplungselements 13 ist mit einer Fase 16 ausgebildet, die ein leichtes Einführen des Aktors 12 gestattet. Der eingeführte Aktor 12 hintergreift einen Absatz 17, wobei das Kopplungselement 13 derart dimensioniert ist, daß etwaige Schiefstellungen des Aktors 12 kompensiert werden.

Figur 4 zeigt den äußeren Abschnitt des Dichtungsmittels 5 in vergrößerter Darstellung. Das Dichtungsmittel 5 weist im Bereich seines Außenumfangs eine Dichtlippe 18 auf, die bei geschlossenem Ventil auf dem Ventilsitz 7 (Figur 1) aufliegt. In der Zeichnung oberhalb der Dichtlippe 18 ist erfindungsgemäß eine Ausnehmung 19 angeordnet, die die Steifigkeit der Dichtungsmittel 5 im Bereich des Außenumfangs reduziert. Die erfindungsgemäße Ausnehmung 19 gestattet es, daß auch bei einer geringfügigen Schiefstellung des Ventilkörpers 2 im Gehäuse 1 oder beispielsweise Toleranzfehlern in der Länge des Ventilkörpers 2 das Dichtungsmittel 5 über seinen gesamten Umfang auf dem Ventilsitz 7 aufliegt und damit das Ventil sicher schließt.

Es wird Bezug genommen auf Figur 1. Die erfindungsgemäße Ausnehmung 19 kann in beiden Dichtungsmitteln 5, 6 ausgebildet sein. Alternativ kann vorgesehen sein, daß lediglich das untere Dichtungsmittel 6 eine derartige Ausnehmung 19 aufweist, wobei vorgeschlagen wird, daß beim Schließen des Ventils zuerst der untere Ventilteller 4 (mit dem durch die Ausnehmung 19 weniger steifen Dichtungsmittel 6) schließt und unmittelbar danach der obere Ventildeckel 3. Diese Steuerung des Schließvorganges verbessert ebenfalls die Funktionssicherheit des Ventils. Eine umgekehrte Steuerung des Schließvorgangs ist ebenfalls möglich.

Im Rahmen des Erfindungsgedankens sind durchaus Abwandlungen möglich. Die Ausnehmung 19 ist in Figur 3 dargestellt als ein im wesentlichen horizontaler Einschnitt. Auch andere Formen und Orientierungen sind denkbar, z. B. eine Neigung der Ausnehmung, die zu einer noch größeren Flexibilität der bzw. des Dichtungsmittel(s) führt. Schließlich ist das Kopplungselement 13 ringförmig dargestellt. Auch hier sind andere Formen denkbar, z. B. quadratisch oder rechteckig. Auch könnte das Kopplungselement den Ventilkörper umgreifen.

## Patentansprüche

1. Ventil, welches als Doppelsitzventil ausgebildet ist mit
- einem Gehäuse (1),
- zwei in dem Gehäuse (1) zugeordnete Ventilsitze (7, 8),
- einem Ventilkörper (2), der in Richtung auf die Ventilsitze bewegbar ist und
- zwei Dichtungsmittel (5;6), die dem Ventilkörper (2) zugeordnet sind und bei Auflage auf die Ventilsitze (7) letztere verschließen, wobei der Ventilkörper (2) in einem ersten Endabschnitt beführt ist,
**dadurch gekennzeichnet,**
**dass** der Ventilkörper (2) in einem ersten Endabschnitt und in einem zweiten Endabschnitt in dem Gehäuse (1) geführt ist und dass im Bereich des Außenumfangs
mindestens eines Dichtungsmittels (5; 6) eine Ausnehmung (19) zur Reduzierung der Steifigkeit vorgesehen ist.

2. Ventil nach Anspruch 1, **dadurch gekennzeichnet, dass** die Ausnehmung (19) im Wesentlichen V-förmig ausgebildet ist.

3. Ventil nach Anspruch 1 oder 2, **dadurch gekennzeichnet, dass** sich die Ausnehmung (19) in radialer Richtung des Dichtungsmittels bis über deren Auflagefläche erstreckt.

4. Ventil nach einem der Ansprüche 1 bis 3, **dadurch gekennzeichnet, dass** der Ventilkörper (2) in mindestens einem hülsenförmigen Lagerelement (9; 10) geführt ist, das in das Gehäuse (1) einsteckbar ist.

5. Ventil nach einem der Ansprüche 1 bis 4, **dadurch gekennzeichnet, dass** der Ventilkörper (2) über einen Aktor betätigbar ist, der über ein Kopplungselement (13) mit dem Ventilkörper verbunden ist.

6. Ventil nach Anspruch 5, **dadurch gekennzeichnet, dass** das Kopplungselement (13) aus einem elastischen Material, vorzugsweise aus Gummi, besteht.

7. Ventil nach Anspruch 5 oder 6, **dadurch gekennzeichnet, dass** das Kopplungselement (13) im wesentlichen ringförmig ausgebildet ist und dass der Aktor das Kopplungselement hintergreift.

8. Ventil nach einem der Ansprüche 5 bis 7, **dadurch gekennzeichnet, dass** der Ventilkörper (2) eine Aufnahme aufweist, in die das Kopplungselement einklipsbar ist.

9. Ventil nach einem der Ansprüche 5 bis 8, **dadurch gekennzeichnet, dass** das Kopplungselement (13) in seinem Zentralbereich eine Öffnung zum Durchgriff des Aktors aufweist, die angefast ist.

10. Ventil nach einem der Ansprüche 3 bis 9, **dadurch gekennzeichnet, dass** die Dichtungsmittel (5; 6) eine unterschiedliche Steifigkeit aufweisen.

11. Ventil nach einem der Ansprüche 3 bis 10, **dadurch gekennzeichnet, dass** der Abstand der Auflageflächen der Dichtungsmittel (5; 6) größer ist als der Abstand der Ventilsitze (7; 8).

## Claims

1. Valve, which is embodied as a double seat valve, having
- a housing (1),
- two valve seats (7, 8) which are assigned to the housing (1),
- a valve body (2) which is movable in the direction of the valve seats, and
- two sealing means (5; 6) which are assigned to the valve body (2) and which, when they come into contact against the valve seats (7), close off the latter, with the valve body (2) being guided in a first end section,
**characterized**
**in that** the valve body (2) is guided, in a first end section and in a second end section, in the housing (1), and in that, in the region of the outer periphery of at least one sealing means (5; 6), a recess (19) is provided for reducing stiffness.

2. Valve according to Claim 1, **characterized in that** the recess (19) is substantially V-shaped.

3. Valve according to Claim 1 or 2, **characterized in that** the recess (19) extends in the radial direction of the sealing means, beyond the contact surface of the latter.

4. Valve according to one of Claims 1 to 3,
**characterized in that** the valve body (2) is guided in at least one sleeve-shaped bearing element (9; 10) which can be inserted into the housing (1).

5. Valve according to one of Claims 1 to 4,
**characterized in that** the valve body (2) can be actuated by means of an actuator which is connected to the valve body by means of a coupling element (13).

6. Valve according to Claim 5, **characterized in that** the coupling element (13) is composed of an elastic material, preferably of rubber.

7. Valve according to Claim 5 or 6, **characterized in that** the coupling element (13) is of substantially annular design and **in that** the actuator engages behind the coupling element.

8. Valve according to one of Claims 5 to 7,
**characterized in that** the valve body (2) has a receptacle into which the coupling element can be clipped.

9. Valve according to one of Claims 5 to 8,
**characterized in that** the coupling element (13) has, in its central region, an opening for the leadthrough of the actuator, which opening is chamfered.

10. Valve according to one of Claims 3 to 9,
**characterized in that** the sealing means (5; 6) have different stiffnesses.

11. Valve according to one of Claims 3 to 10,
**characterized in that** the spacing of the contact surfaces of the sealing means (5; 6) is greater than the spacing of the valve seats (7; 8).

## Revendications

1. Soupape, réalisée sous la forme d'une soupape à siège double, comprenant :
- un boîtier (1),
- deux sièges de soupape (7, 8) associés disposés dans le boîtier (1),
- un corps de soupape (2) qui peut être déplacé dans la direction des sièges de soupape et
- deux moyens d'étanchéité (5 ; 6) qui sont associés au corps de soupape (2) et, qui, lorsqu'ils s'appuient sur les sièges de soupape (7), ferment ces derniers, le corps de soupape (2) étant guidé dans une première portion d'extrémité,
**caractérisée en ce que**
le corps de soupape (2) est guidé dans une première portion d'extrémité et dans une deuxième portion d'extrémité dans le boîtier (1), et **en ce que** dans la région de la périphérie extérieure d'au moins un moyen d'étanchéité (5 ; 6), on prévoit un évidement (19) pour réduire la rigidité.

2. Soupape selon la revendication 1, **caractérisée en ce que** l'évidement (19) est réalisé essentiellement en forme de V.

3. Soupape selon la revendication 1 ou 2,
**caractérisée en ce que** l'évidement (19) s'étend dans la direction radiale du moyen d'étanchéité jusqu'au-dessus de sa surface d'appui.

4. Soupape selon l'une quelconque des revendications 1 à 3, **caractérisée en ce que** le corps de soupape (2) est guidé dans au moins un élément de palier en forme de douille (9 ; 10) qui peut être enfoncé dans le boîtier (1).

5. Soupape selon l'une quelconque des revendications 1 à 4, **caractérisée en ce que** le corps de soupape (2) peut être actionné par le biais d'un actionneur, qui est connecté par le biais d'un élément d'accouplement (13) au corps de soupape.

6. Soupape selon la revendication 5, **caractérisée en ce que** l'élément d'accouplement (13) se compose d'un matériau élastique, de préférence de caoutchouc.

7. Soupape selon la revendication 5 ou 6,
**caractérisée en ce que** l'élément d'accouplement (13) est réalisé essentiellement sous forme annulaire et **en ce que** l'actionneur vient en prise par l'arrière avec l'élément d'accouplement.

8. Soupape selon l'une quelconque des revendications 5 à 7, **caractérisée en ce que** le corps de soupape (2) présente un logement dans lequel l'élément d'accouplement peut être enclipsé.

9. Soupape selon l'une quelconque des revendications 5 à 8, **caractérisée en ce que** l'élément d'accouplement (13) présente, dans sa région centrale, une ouverture pour le passage de l'actionneur, laquelle est biseautée.

10. Soupape selon l'une quelconque des revendications 3 à 9, **caractérisée en ce que** les moyens d'étanchéité (5 ; 6) présentent une rigidité différente.

11. Soupape selon l'une quelconque des revendications 3 à 10, **caractérisée en ce que** la distance entre les surfaces d'appui des moyens d'étanchéité (5 ; 6) est supérieure à la distance entre les sièges de soupape (7 ; 8).
